Europäisches Patentamt

European Patent Office

Office européen des brevets

(11) Veröffentlichungsnummer: **0 464 701 A2**

# EUROPÄISCHE PATENTANMELDUNG

(21) Anmeldenummer: **91110739.9**

(51) Int. Cl.5: **G02B 5/28**

(22) Anmeldetag: **28.06.91**

(30) Priorität: **29.06.90 DE 4020696**

(43) Veröffentlichungstag der Anmeldung:
**08.01.92 Patentblatt 92/02**

(84) Benannte Vertragsstaaten:
**DE FR GB IT SE**

(71) Anmelder: **RENKER GmbH & Co. KG**
**Hausener Weg 1, Postfach 64 40**
**W-7800 Freiburg(DE)**

(72) Erfinder: **Pytlik, Horst**
Freytagstrasse 5
W-7800 Freiburg(DE)
Erfinder: **Müller, Werner, Dr.**
**Kappellenweg 1**
**W-7891 Sölden(DE)**
Erfinder: **Siefert, Wolfgang, Dr.**
**Benfelder Strasse 5**
**W-7637 Ettenheim(DE)**

(74) Vertreter: **Rackette, Karl, Dipl.-Phys. Dr.-Ing**
**Kaiser-Joseph-Strasse 179 Postfach 1310**
**W-7800 Freiburg(DE)**

(54) **Mehrschichtsystem mit hohem Reflexionsvermögen im Infrarot-Spektralbereich und mit hohem Transmissionsvermögen im sichtbaren Bereich.**

(57) Ein Trägersubstrat (31) mit hohem Transmissionsvermögen für sichtbares Licht ist mit einem Schichtaufbau (32, 33, 34, 43, 44) beschichtet, um bei einem hohen Transmissionsvermögen für sichtbares Licht ein hohes Reflexionsvermögen für Wärmestrahlung zu erzielen. Dazu sind zwei Metallschichten (33, 43), die voneinander durch eine dielektrische Distanzschicht (34) getrennt sind und vorzugsweise aus Silber bestehen, zwischen einer dielektrischen Zwischenschicht (32) und einer dielektrischen Deckschicht (44) eingebettet. Die dielektrischen Schichten (32, 34, 44) enthalten jeweils als Hauptbestandteil Nioboxid.

EP 0 464 701 A2

Die Erfindung betrifft ein Mehrschichtsystem mit hohem Reflexionsvermögen im Infrarot-Spektralbereich und mit hohem Transmissionsvermögen imsichtbaren Spektralbereich, mit einem Trägersubstrat und zwei Metallschichten, die zwischen zwei eine dielektrische Zwischenschicht und eine dielektrische Deckschicht bildende Metalloxidschichten eingebettet und durch eine dielektrische Distanzschicht in einem Abstand voneinander angeordnet sind.

Ein derartiges Mehrschichtsystem ist aus der US-PS 4 799 745 bekannt und dient als im Sichtbaren transparenter, aber im Infraroten reflektierender Film, der insbesondere bei der Herstellung von Frontscheiben für Kraftfahrzeuge eingesetzt werden kann. Der Schichtenaufbau des bekannten Mehrschichtsystems stellt ein Fabry-Perot Interferenzfilter dar, das durch Aufsputtern von Silberschichten mit einer dazwischenliegenden Distanzschicht und optionalen Grenzschichten auf einem transparenten Trägersubstrat ausgebildet ist. Die Distanzschicht und die optionalen Grenzschichten bestehen aus Metalloxiden.

In der EP-PS 303 586 und 303 587 sind derartige 5-Schicht-Systeme beschrieben, bei denen die Metallschichten zum Heizen von einem elektrischen Strom durchflossen werden.

Ausgehend von dem oben beschriebenen Stand der Technik liegt der Erfindung die Aufgabe zugrunde, ein Mehrschichtsystem für ein Laminat zu schaffen, das sich durch eine besonders hohe Transmission im sichtbaren Spektralbereich bei einer breitbandigen Entspiegelung und durch eine hohe Korrosionsstabilität auszeichnet.

Diese Aufgabe wird erfindungsgemäß dadurch gelöst, daß wenigstens die dielektrische Deckschicht als Hauptbestandteil Nioboxid enthält.

Bei einem bevorzugten Ausführungsbeispiel enthalten alle dielektrischen Schichten 40 bis 100 Prozent Nioboxidanteil. Der Brechungsindex der Nioboxidschicht hängt von den spezifischen Herstellungsparametern ab und liegt im Bereich zwischen n = 2,4 und n = 2,7.

Die Nioboxidschichten können durch Kathodenzerstäubung, chemische Dampfabscheidung oder eine plasmaunterstützte chemische Dampfabscheidung hergestellt werden.

Die Metallschichten bestehen in an sich bekannter Weise aus einem Metall der Gruppe Silber, Gold, Kupfer, Aluminium oder einer wenigstens eines dieser Metalle enthaltenden Legierung. Sie haben eine Dicke, die zwischen 5 und 50 Nanometer, vorzugsweise zwischen 5 und 30 Nanometer liegt.

Als Trägersubstrat kann in an sich bekannter Weise eine transparente Kunststoffolie, insbesondere eine Polyesterfolie, eine Polykarbonatfolie oder eine Polymethylmethacrylatfolie mit einer Dicke zwischen 12 und 200 Mikrometer verwendet werden.

Es ist auch möglich, das Nioboxid enthaltende dielektrische Schichten aufweisende Mehrschichtsystem auf einer transparenten Glasscheibe als Trägersubstrat aufzubringen.

Das Mehrschichtsystem auf Foliensubstrat kann durch beidseitiges Aufbringen von Schmelzkleberfolien zu einem Kunststofflaminat verarbeitet werden, das sich zum Herstellen von Windschutzscheiben mit einer extrem hohen Transparenz im Sichtbaren und einem guten Reflexionsvermögen für unerwünschte Wärmestrahlung eignet.

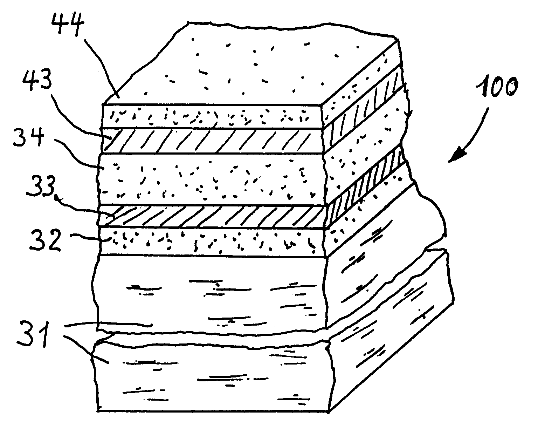

Nachfolgend wird ein Ausführungsbeispiel der Erfindung anhand der einzigen Figur beschrieben, die in perspektivischer Ansicht einen Querschnitt durch das erfindungsgemäße Mehrschichtsystem darstellt.

In der nicht maßstäblichen Zeichnung erkennt man ein Fabry-Perot Interferenzfilter enthaltendes Mehrschichtsystem 100 im Querschnitt, das als Trägersubstrat 31 eine Glasscheibe oder eine Kunststoffolie, wie Polyesterfolie, Polykarbonatfolie oder Polymethylmethacrylatfolie, aufweist. Wenn das Trägersubstrat 31 eine Glasscheibe ist, verfügt diese über eine für die mechanische Stabilität ausreichende Schichtdicke. Wenn das Trägersubstrat 31 eine Kunststoffolie ist, hat diese eine Dicke zwischen 12 und 200 Mikrometer. Das Trägersubstrat 31 aus Glas oder aus Kunststoff ist für sichtbares Licht transparent und hat eine flächenhafte Ausdehnung, die von der nachfolgenden Verwendung des Mehrschichtensystems abhängig ist. Die Transmission der als Trägersubstrat verwendeten Kunststoffolie beträgt beispielsweise 88 Prozent.

Bei dem in der Zeichnung dargestellten Ausführungsbeispiel ist auf dem Trägersubstrat 31 zunächst eine dielektrische Zwischenschicht 32 vorgesehen. Die erwünschten Eigenschaften des Mehrschichtsystems 100 sind besonders günstig, wenn alle dielektrischen Schichten 32, 34, 44 als Hauptbestandteil Nioboxide haben.

Die dielektrische Zwischenschicht 32 hat eine Dicke von 20 bis 50 Nanometer und besteht teilweise oder ganz aus Nioboxid ($Nb_2O_5$) mit einem Brechungsindex n, der zwischen 2,4 und 2,7 liegt.

Die dielektrische Zwischenschicht 32 enthält vorzugsweise 40 bis 100 Prozent Nioboxid. Wenn die dielektrische Zwischenschicht 32 neben Nioboxid andere Stoffe enthält, bestehen diese vorzugsweise aus Metalloxiden oder Metallnitriden. Wenn die Dielektrika 32, 34, 44 jeweils aus mehr als 95 Prozent Nioboxid bestehen, beträgt die Dicke der Zwischenschicht 32 28 Nanometer. Wenn die Distanzschicht 34 allerdings aus Zinnoxid besteht, dann beträgt die Dicke der Zwischenschicht 32 21 Nanometer.

Als nächste Schicht im Schichtaufbau des in der Zeichnung dargestellten Mehrschichtsystems ist eine erste Metallschicht 33 vorgesehen. Die erste Metallschicht 33 besteht aus einer Silber-Schicht mit einer Dicke zwischen 5 und 50 Nanometer, vorzugsweise 5 bis 30 Nanometer. Der elektrische Flächenwiderstand der ersten Metallschicht 33 aus Silber liegt zwischen 3 und 8 Ohm/Quadrat.

Statt einer ersten Metallschicht 33 aus reinem Silber kann auch eine erste Metallschicht 33 vorgesehen sein, die Gold, Kupfer oder Aluminium enthält. Diese Metalle können rein oder als Legierung mit einem der anderen erwähnten Metalle vorliegen.

Die erste Metallschicht 33 ist mit einer weiteren dielektrischen Schicht, nämlich einer dielektrischen Distanzschicht 34 überzogen, die zusammen mit der ersten Metallschicht 33 und einer gleichartig gebildeten zweiten Metallschicht 43 eine Antireflexschicht auf der Grundlage des Fabry-Perot Interferometers im Sichtbaren bildet. Die dielektrische Distanzschicht 34 ist chemisch entsprechend der dielektrischen Zwischenschicht 32 aufgebaut, aber sie ist etwa doppelt so dick. Sie besteht ebenfalls ganz oder im wesentlichen aus Nioboxid und hat eine Dicke zwischen 40 und 100 Nanometer, insbesondere 59 Nanometer bei einem Nioboxidanteil von mehr als 95 Prozent.

Bei einer abgewandelten Ausführungsform der Erfindung besteht die Distanzschicht 34 aus einem Metall- oder Metall-Legierungs-Oxid mit einer Brechzahl von mehr als 1,8, vorwiegend aus Zinnoxid, Indiumoxid, Zinkoxid oder Titanoxid. Die bevorzugte Dicke einer Distanzschicht 34 aus Zinnoxid beträgt 89 Nanometer.

Nach dem Auftragen der zweiten Metallschicht 43, deren Dicke ebenso wie die der ersten Metallschicht 33 zwischen 5 und 50 Nanometer, vorzugsweise 5 bis 30 Nanometer beträgt, wird auf die zweite Metallschicht 43 eine dielektrische Deckschicht 44 aufgebracht, die in ihrer chemischen Zusammensetzung der dielektrischen Zwischenschicht 32 entspricht. Die Dicke der dielektrischen Deckschicht 44 beträgt 20 bis 50 Nanometer und beträgt damit etwa die Hälfte der Dicke der Distanzschicht 34. Die Schichten 32 und 44 enthalten als Hauptbestandteil 40 bis 100 Prozent Nioboxid. Bei einem Nioboxidgehalt von 95 Prozent oder mehr beträgt die Dicke der Deckschicht 44 vorzugsweise 30 Nanometer. Als Nebenbestandteile werden vorzugsweise Metalloxide verwendet.

Die dielektrische Zwischenschicht 32, die dielektrische Deckschicht 44 aus reinem Nioboxid oder aus Nioboxid und anderen Metalloxiden zeichnen sich nicht nur durch die günstigen optischen Eigenschaften aus, sondern auch dadurch, daß Nioboxid korrosionsstabil ist und einen exzellenten Schutz für die eingeschlossenen Metallschichten bildet. Hierdurch ergibt sich der Vorteil einer höheren Lebensdauer in der Anwendung. Ein weiterer Vorteil des Nioboxids besteht darin, daß keine Vorkehrungen getroffen werden müssen, um beim Aufbringen der dielektrischen Distanzschicht 34 und der dielektrischen Deckschicht 44 ein Beschädigen der Metallschichten 33 bzw. 43 aus Silber zu verhindern.

Bei einem bevorzugten Ausführungsbeispiel besteht die Zwischenschicht 32 zu 100 Prozent aus Nioboxid mit einer Schichtdicke von 28 Nanometern, wobei die Distanzschicht 34 und die Deckschicht 44 aus Nioboxid bestehen. Die Schichtdicke der Zwischenschicht 32 beträgt vorzugsweise 21 Nanometer, wenn die Distanzschicht 34 aus Zinnoxid besteht. Die Dicke der Distanzschicht 34 beträgt vorzugsweise 59 Nanometer, wenn die Distanzschicht 34 aus Nioboxid und 89 Nanometer, wenn die Distanzschicht 34 aus Zinnoxid besteht.

Das Aufbringen der dielektrischen Zwischenschicht 32, der ersten Metallschicht 33, der dielektrischen Distanzschicht 34, der zweiten Metallschicht 43 und der dielektrischen Deckschicht 44 auf das Trägersubstrat 31 aus Glas oder Kunststoff kann durch verschiedene Verfahren erfolgen. Insbesondere können die Verfahren der Kathodenzerstäubung, der chemischen Dampfabscheidung und der plasmaunterstützten chemischen Dampfabscheidung zum Erzeugen der Schichten Verwendung finden.

Ein bevorzugtes Verfahren zur Abscheidung der Nioboxid enthaltenden Schichten ist die Magnetron-Kathodenzerstäubung in Form eines DC-gespeisten Reaktivprozesses (Reaktivsputtern von $NbO_x$). Hierbei wird mit metallischen Targets gearbeitet und dem Entladungsgas - bevorzugt Argon - als Reaktivgas Sauerstoff beigemischt. Um auf diese Weise absorptionsfreie Schichten in großtechnischem Maßstab kontrollierbar herstellen zu können, besteht eine bevorzugte Ausführungsform des Verfahrens darin, dem Entladungsgas einen Anteil von 5 bis 30 Prozent Wasserstoff beizumischen.

Das in der Zeichnung dargestellte Mehrschichtsystem 100 kann Ausgangsmaterial für ein Kunststofflaminat sein, wobei jede der beiden Seiten des Mehrschichtsystems mit einer Folie aus Polyvinylbutyral, Polyurethan oder einer anderen Schmelzkleberfolie kaschiert wird. Die Dicke der Kleberfolien beträgt dabei 0,2 bis 0,4 Millimeter. Das auf diese Weise gebildete Kunststofflaminat kann zwischen zwei Glasplatten eingebettet werden, mit denen es eine Verbundsicherheitsglasscheibe bildet, die sich durch eine hohe Reflexion im Infrarot-Bereich aufgrund der charakteristischen Eigenschaft des Mehrschichtsystems 100 mit großer Transmission im sichtbaren Bereich auszeichnet.

Von besonderem Interesse für die Anwendung als Verbundglassicherheitsscheibe ist es, daß die Verwendung von Nioboxid für die Zwischenschicht 32, die Distanzschicht 34 und die Deckschicht 44 die Reflexion im Wellenlängenbereich von 400 bis 660 Nanometer bis unter 0,5 Prozent genutzt werden kann.

Statt der oben erwähnten Einbettung eines Kunststofflaminates zwischen zwei Glasplatten, ist es auch möglich ein Mehrschichtsystem mit einem Trägersubstrat 31 aus Kunststoff vorzusehen und dieses Mehrschichtensystem mit seiner Deckschicht 44 unter Verwendung einer Klebefolie auf eine Glasscheibe aufzubringen.

Die Metallschichten 33, 43 können zusätzlich zu ihren optischen Aufgaben auch die Aufgabe einer Heizschicht, z.B. bei einer Frontscheibe eines Autos, erfüllen, wenn sie an einen entsprechend ausgelegten Heizstromkreis angeschlossen werden.

Eine weitere Anwendungsmöglichkeit des oben beschriebenen Mehrschichtsystems besteht darin, dieses zwischen zwei Glasscheiben frei gespannt anzuordnen, um auf diese Weise einen Sonnenschutz und eine Wärmeisolation für Fenster zu bilden. Von besonderem Vorteil ist es dabei, daß eine Trockenpatrone in einem derartigen Isolierglasfenster nicht benötigt wird.

**Patentansprüche**

1. Mehrschichtsystem mit hohem Reflexionsvermögen im Infrarot-Spektralbereich und mit hohem Transmissionsvermögen im sichtbaren Spektralbereich, mit einem Trägersubstrat und zwei Metallschichten, die zwischen zwei eine dielektrische Zwischenschicht und eine dielektrische Deckschicht bildende Metalloxidschichten eingebettet und durch eine dielektrische Distanzschicht in einem Abstand voneinander angeordnet sind, **dadurch gekennzeichnet,** daß wenigstens die dielektrische Deckschicht (44) als Hauptbestandteil Nioboxid enthält.

2. Mehrschichtsystem nach Anspruch 1, dadurch gekennzeichnet, daß zwei (44, 34 oder 44, 32) der drei dielektrischen Schichten (32, 34, 44) als Hauptbestandteil Nioboxid enthalten.

3. Mehrschichtsystem nach Anspruch 1, dadurch gekennzeichnet, daß alle drei dielektrischen Schichten (32, 34, 44) als Hauptbestandteil Nioboxid enthalten.

4. Mehrschichtsystem nach einem der Ansprüche 1 bis 3, dadurch gekennzeichnet, daß die dielektrischen Schichten (32, 34, 44) 40 bis 100 Prozent Nioboxid enthalten

5. Mehrschichtsystem nach Anspruch 1, dadurch gekennzeichnet, daß zwischen dem Trägersubstrat (31) und der Metallschicht (33) eine Nioboxid enthaltende dielektrische Zwischenschicht (32) vorgesehen ist.

6. Mehrschichtsystem nach einem der vorstehenden Ansprüche, dadurch gekennzeichnet, daß die dielektrische Distanzschicht (34) eine Dicke im Bereich von 40 bis 100 Nanometer und die beiden anderen dielektrischen Schichten (32, 44) eine Dicke von 20 bis 50 Nanometer aufweisen.

7. Mehrschichtsystem nach einem der vorstehenden Ansprüche, dadurch gekennzeichnet, daß die dielektrischen Schichten (32, 34, 44) durch Kathodenzerstäubung, chemische Dampfabscheidung oder plasmaunterstützte chemische Dampfabscheidung hergestellt sind.

8. Mehrschichtsystem nach einem der vorstehenden Ansprüche, dadurch gekennzeichnet, daß die Metallschichten (33, 43) aus einem Metall der Gruppe Silber, Gold, Kupfer, Aluminium oder einer wenigstens eines dieser Metalle enthaltenden Legierung bestehen.

9. Mehrschichtsystem nach einem der vorstehenden Ansprüche, dadurch gekennzeichnet, daß die Metallschichten (33, 43) eine Dicke zwischen 5 und 50 Nanometer, vorzugsweise zwischen 5 und 30 Nanometer aufweisen.

10. Mehrschichtsystem nach einem der Ansprüche 1 bis 9, dadurch gekennzeichnet, daß das Trägersubstrat (31) eine transparente Kunststofffolie, insbesondere eine Polyesterfolie, eine Polykarbonatfolie oder eine Polymethylmethacrylatfolie mit einer Dicke zwischen 12 und 200 Mikrometer ist.

11. Mehrschichtsystem nach einem der Ansprüche 1 bis 9, dadurch gekennzeichnet, daß das Trägersubstrat (31) eine transparente Glasscheibe ist.

12. Mehrschichtsystem nach Anspruch 7, dadurch gekennzeichnet, daß die Nioboxid enthaltenden Schichten durch eine Kathodenzerstäubung abgeschieden werden, bei der dem Entladungsgas 5 bis 30 Prozent Wasserstoff beigefügt sind.

13. Mehrschichtsystem nach Anspruch 12, dadurch gekennzeichnet, daß die Kathodenzerstäubung in Formeines DC-gespeisten Reaktionsprozesses mit magnetisch unterstützten Kathoden erfolgt.

14. Folienlaminat mit hohem Transmissionsvermögen für sichtbares Licht und hohem Reflexionsvermögen für Infrarotstrahlung, gekennzeichnet durch eine beschichtete Kunststoffolie (31 bis 44) nach den Merkmalen der Ansprüche 1 bis 10, deren beide Seiten mit einer Folie aus Polyvinylbutyral kaschiert sind.